# EUROPEAN PATENT SPECIFICATION

(11) **EP 3 260 576 B1**
(45) Date of publication and mention of the grant of the patent: **30.01.2019**
(21) Application number: 16175712.5
(22) Date of filing: 22.06.2016
(51) Int. Cl.: C23F 11/10, C02F 5/12, C09K 5/20, C10M 173/00, C23F 11/14, C23F 14/02

(54) **AQUEOUS OIL-IN-WATER EMULSIONS OF ORGANIC AMINES**
WÄSSRIGE ÖL-IN-WASSER-EMULSIONEN AUS ORGANISCHEN AMINEN
ÉMULSIONS AQUEUSES HUILE DANS L'EAU D'AMINES ORGANIQUES

(43) Date of publication of application: 27.12.2017
(73) Proprietor: Kurita Water Industries Ltd., Nakano-ku, Tokyo 164-0001 (JP)
(72) Inventor: Jasper, Julia, 47809 Krefeld (DE); Zimmer, Kirstin, 42659 Solingen (DE); De Bache, André, 40764 Langenfeld (DE); Hater, Wolfgang, 41564 Kaarst (DE)
(74) Representative: Reitstötter Kinzebach

(56) References cited:
- WO-A1-03/007715
- GB-A- 2 528 112
- US-A- 4 562 042
- US-A1- 2013 119 303

## Description

The present invention relates to aqueous oil-in-water emulsion containing:
a) an oil phase comprising at least one organic amine of the formula (I)

   R¹-(NH-R²)ₙ-NH₂ (I)

   wherein
   - n: is an integer from 0 to 7, in particular 0, 1 or 2,
   - R¹: is a linear or branched, acyclic hydrocarbon group having 12 to 22 carbon atoms;
   - R²: is C2-C4-alkanediyl;
b) and water;
wherein the amount of amines of formula (I) with n being 1 or 2 is at least 90 % by weight, based on the total amount of amines of the formula (I) contained in the oil phase.

The invention also relates to a process for preparing such emulsions and to the use of these emulsions for protecting water bearing systems, in particular water circuits and steam circuits of steam generators, against corrosion or scaling.

Water-bearing systems, in particular water circuits and steam circuits of steam generators, e.g. steam generators in electrical power plants, require water treatment in order to prevent damage of their water parts by corrosion and scaling. Traditional programs have three components, namely oxygen scavengers, alkalising amines and phosphate.

A more recent approach for protecting water-bearing systems, in particular water circuits and steam circuits of steam generators, is based on film forming amines. Film forming amines are characterized in that they bear at least one long-chain alkyl- or alkenyl group. Film forming amines can be described by the formula (I) as described above. Amongst film forming amines of the formula (I), preference is given those amines, which contain a high proportion of compounds, where n is 1 or 2.

Film forming amines form a thin compact film on metallic or metal oxide surfaces, preventing oxygen and CO₂ coming into contact with the surface thereby preventing corrosion. Apart from that film forming amines may hamper crystallization processes involved in scale formation. Therefore, film forming amines allow for replacing oxygen scavengers and reduce the required amount of scale inhibitors, such as phosphate. As film forming amines are at least partly steam volatile, they are capable of protecting the complete steam system of a steam generator, i.e. both water circuits and steam circuits.

For a general review on film forming technology see e.g. I. Betova et al. Film-Forming Amines in Steam/Water Cycles, VTT Research Report: VTT-R-03234-14 (2014) and the references cited therein, see also Hater et al. Film Forming Technology in Hydrocarbon Engineering, 2015 (9).

In pure form film forming amines of the formula (I) are pasty substances, which cannot be dosed accurately. Therefore, it is highly desirable to provide formulations which can be dosed accurately and which do not contain substances, which might deteriorate the film forming properties of the amine or affect the stability of the amine or the emulsion. Ideally, the formulation should not contain any or at most 2 % of ingredients other than film-forming amines, as further additives may deteriorate the film forming properties of the amines and may increase the risk of corrosion or decomposition of the film-forming amines.

Unfortunately, it is technically difficult to prepare stable aqueous emulsions of the film forming amines of the formula (I). In order to stabilize the emulsion, emulsifiers are used for stabilizing the emulsions. Short chain carboxylic acids, such as acetic acid, are frequently used to assist solubilisation of the film forming amine in water. As these acids lower the pH-value of the emulsion and of the boiler water, especially due to their thermal decomposition in the steam circuit, they tend to increase the corrosion risk. Ammonia or short chain alkyl amines may be added to the product to increase the pH value and to reduce the corrosion risk, but they tend to destabilize the emulsion.

GB 859074 describes aqueous emulsions of a film forming alkyl amine (a), such as octadecyl amine, which are stabilized with ethylene oxide condensation products of an alkyl amine (b). The weight ratio (a) : (b) is in the range from 1 : 1 to 20 : 1. These emulsion are pasty and require melting and dilution with water in order to obtain an easy to meter composition.

GB 1042166 describes aqueous emulsions of a film forming alkyl amine (a), such as octadecyl amine, which are stabilized with polyhydroyxyl phenolic compounds, such as lignin sulfonate, as a dispersing agent. These emulsions have a reduced viscosity and therefore are easier to be diluted with water. The weight ratio of the film forming amine to the phenolic compound is in the range from 1 : 1 to 20 : 1.

The use of film forming amines of the formula (I), where n is 1 or 2, in the treatment of water-bearing systems of steam generators has been described in GB 1,095,865. The amines are mixed with up to 2 % by weight of an ethoxylated amine and emulsified in water with stirring to obtain a slightly gelled emulsion of the amine. These emulsions, however, are not storage stable and tend to segregate very quickly.

US 4,276,089 describes anti corrosion compositions containing a film forming amine of the formula (I) with n = 1 - 7, and at least one aminoalkylene phosphoric acid derivative in order to improve the anti-corrosion properties. The compositions are pastes which are difficult to dose.

EP 698580 describes a composition for reducing scaling and corrosion which contains a salt of polymeric polycarboxylic acid, fatty polyamine of the formula (I), where R¹ is an aliphatic group having 12 - 18 carbon atoms, n is an integer from 1 - 6 and R² is 1,3-propanediyl, a hydrotropic compounds, such as camphene sulfonate in order to solubilize the ingredients and a hydroxylamine as oxygen scavenger.

It is an object of the present invention to provide storage stable aqueous formulations of film forming amines of the formula (I), wherein the amount of amines of formula (I) with n being 1 or 2 is at least 90 % by weight, based on the total amount of film forming amines of the formula (I) contained in the formulation, and which do not contain considerable amounts of other organic ingredients, which are different from the amines of formula (I). The aqueous formulation should have a low viscosity for allowing exact dosage and should be stable against segregation for at least 4 month at temperatures in the range from 5 to 40°C.

It has now been found that aqueous oil-in-water emulsions as defined at the outset, which contain 1 to 5 % by weight, based on the total weight of the emulsion, of an oil phase comprising at least one organic amine of the formula (I), wherein the amount of amines of formula (I) with n being 1 or 2 is at least 90 % by weight, based on the total amount of amines of the formula (I) contained in the emulsion, and which do not contain considerable amounts of other organic ingredients, which are different from the amines of formula (I), are stable, if they have one or in particular both of the following properties P.1 and P.2:
P.1: The number average particle diameter of the droplets of the oil phase, as determined by light microscopy of at least 50 droplets is in the range of 1 to 11 µm;
P.2: The instability index as defined by the ratio of observed clarification to maximum clarification, as determined by photo-centrifugation for 390 seconds at a gravitational acceleration of 2.23 g and a temperature of 25°C is at most 0.025.

Therefore, the present invention relates to oil-in-water emulsions, which contain 1 to 5 % by weight, based on the total weight of the emulsion, of an oil phase comprising at least one organic amine of the formula (I) as defined at the outset, wherein the amount of amines of formula (I) with n being 1 or 2 is at least 90 % by weight, based on the total amount of amines of the formula (I) contained in the emulsion, and wherein the amount of organic ingredients, which are different from the amines of formula (I) does not exceed 2 % by weight, in particular 1 % by weight, based on total amount of organic components contained in the aqueous oil-in-water emulsion, which have one or both of the properties P.1 and P.2.

The present invention also relates to a process for producing the aqueous oil-in-water emulsions of the present invention as described herein, which comprises the following steps:
i) providing a mixture of an organic amine of the formula (I) and water, where the organic amine of formula (I) comprises at least 90 % by weight, based on the total amount of the organic amine of formula (I), of an organic amine of formula (I) with n being 1 or 2, wherein the weight ratio of the organic amine of the formula (I) and water is in the range from 1 : 99 to 5 : 95, and
ii) homogenizing the mixture by using a rotor-stator homogenizer or by using a high pressure homogenizer.

The invention also relates to the aqueous oil-in-water emulsions of the present invention as described herein, which are obtainable by the process as described herein.

The aqueous oil-in-water emulsions of the invention are stable against segregation for at least 4 month at temperatures in the range from 5 to 40°C. In particular, the emulsions do not show visible phase separation such as formation of clouds or smears after a storage period of 4 month at temperatures in the range from 5 to 40°C. Apart from that, the emulsions have a low dynamic viscosity, e.g. of less than 300 mPas at 20°C, in particular less than 200 mPas at 20°C, as determined by the Brookfield method by analogy to DIN EN ISO 2555:2000-01 (spindle 2 and 100 rpm) and therefore allow an exact dosage of the film forming amine. Due to the high amount of amines of formula (I) with n being 1 or 2 and due to the low amount of organic material, which is different from the amines of formula (I), the aqueous oil-in-water emulsions of the invention provide for good corrosion inhibition. Moreover, when using the aqueous oil-in-water emulsion of the invention in water-bearing systems, in particular in water circuits of steam generators or in steam circuits of steam generators, the risk of formation of acidic decomposition products is low.

Therefore, the present invention also relates to the use of the aqueous oil-in-water emulsion of the present invention as a corrosion inhibitor in water-bearing systems in particular in water circuits of steam generators or in steam circuits of steam generators.

The aqueous oil-in-water emulsions of the present invention are characterized by their chemical composition, i.e.
- they contain a certain amount of amines of the formula (I) and water,
- the amount of amines of formula (I) with n being 1 or 2 is at least 90 % by weight, in particular at least 95 % by weight, based on the total amount of amines of the formula (I) contained in the emulsion,
- the emulsion does not contain considerable amounts of organic matter, which is different from the amines of formula (I), i.e. the amount of organic matter, which is different from the amines of formula (I), does not exceed 2 % by weight, in particular 1 % by weight, especially 0.5 % by weight, based on the total amount of organic matter contained in the emulsion.

The aqueous oil-in-water emulsions of the present invention are characterized by their physicochemical properties, namely
- the fact that the amines of formula (I) form an oil-phase, which is emulsified as droplets in water, the latter forming the coherent phase of the oil in water emulsion,
- and one or both of the properties P.1 and P.2.

The property P.1 is the number average particle diameter of the droplets of the oil phase, which is determined by light microscopy of at least 50 randomly selected droplets of a probe of the aqueous oil-in-water emulsion. For this the individual particle diameter of at least 50 randomly selected droplets of the probe can be determined and the number average diameter can be calculated from the individual values.

It may also be possible to estimate the property P.1 in a more simply way by putting a drop of 10 microliters onto a microscope glass slide at 20 °C, spreading the drop out to a film by covering it with a microscope cover glass of a size of 18 * 18 mm and regarding under top light at a magnification of 100, so that the complete image area is 0.19 mm², and counting the drops which have a diameter in the range of 1 to 11 µm. If the complete image area exhibits at least 50, in particular at least 70 or at least 100 droplets having a diameter between 1 and 11 µm the number average particle diameter will be in the same range.

The property P.2 is the so called instability index. This index is ratio of the clarification change ΔTᵢ at a given separation time t and a defined gravitational acceleration divided by the maximum clarification possible ΔTₘₐₓ at the defined gravitational acceleration. The clarification quantifies the increase in optical transmission (and thus the decrease in particle concentration) due to phase separation by forced sedimentation or creaming/flotation caused by the defined centrifugal/gravitational acceleration.

The instability index is a dimensionless number between 0 and 1. "Zero" means no changes of particle concentration (very stable), and "1" means that the dispersion has completely phase separated (very unstable). The instability index can be determined by the photo-centrifugation method described by T. Detloff, T. Sobisch, D. Lerche in "Dispersion Letters Technical", T4 (2013), pp. 1 - 4 (Update 2014).

The instability index as described herein refers to measurements by the method of T. Detloff et al. (loc. cit.) at a gravitational acceleration of 2.23 g and a temperature of 25°C after a separation time t of 390 s. The wavelength for determining the optical transmission was 470 nm. Further details are given in the experimental part. According to the invention, the instability index of the aqueous oil-in-water emulsions is at most 0.025.

The aqueous oil-in-water emulsion contains from 1 to 5 % by weight, in particular from 1.5 to 3 % by weight of the oil phase, which comprises at least one amine of the formula (I). As the aqueous oil-in-water emulsion of the invention does not contain significant amounts of organic compounds, which are different from the amine of the formula (I), the oil phase essentially consists of the organic amine of the formula (I). In other words, the amount of organic amine of the formula (I) is at least 98 % by weight, in particular at least 99 % by weight, especially at least 99.5 % by weight, based on the total weight of organic matter contained in the emulsion.

In particular, the aqueous oil-in-water emulsion of the invention does not contain more than 0.02 % by weight, in particular not more than 0.01 % by weight, based on the total weight of the emulsion, of carboxylic acids, such as formic acid, acetic acid or propionic acid. In particular, the aqueous oil-in-water emulsion of the invention does not contain more than 0.02 % by weight, in particular not more than 0.01 % by weight, based on the total weight of the emulsion, of conventional surfactants, such as alkoxylated fatty alkohols, alkoxylated fatty amines or alkoxylated fatty acid esters. In particular, the aqueous oil-in-water emulsion of the invention does not contain more than 0.05 % by weight, in particular not more than 0.03 % by weight, based on the total weight of the emulsion, of ammonia.

In particular, the aqueous oil-in-water emulsion of the invention does not contain more than 0.1 % by weight, in particular not more than 0.05 % by weight, especially not more than 0.02 % by weight or 0.01 % by weight, based on the total weight of the emulsion, of inorganic impurities such as salts.

According to the invention, the relative amount of the amine of the formula (I), where n is 1 or 2, to the total amount of the amine of the formula (I) contained in the emulsion of the invention, is at least 90 % by weight, in particular at least 95 % by weight, i.e. the relative amount of amine of the formula (I), where n is 0 is at most 10 % by weight, in particular at most 5 % by weight, based on the total amount of the amine of the formula (I) contained in the emulsion of the invention. Consequently, the concentration of amines of formula (I), where n is 0 is less than 0.5 % by weight, in particular less than 0.3 % by weight or less than 0.2 % by weight, based on the total weight of the aqueous emulsion of the present invention.

In the emulsion of the invention, the amine of formula (I), wherein n is 1 or 2, preferably contributes with at least 90 % by weight, in particular with at least 95 % by weight, to the total amount of organic carbon contained in the emulsion.

In the context of formula (I), R¹ is preferably a linear, i.e. straight chain, hydrocarbon group having 12 to 22 carbon atoms, in particular a saturated linear hydrocarbon group having 12 to 22 carbon atoms or an unsaturated linear hydrocarbon group having 12 to 22 carbon atoms and 1, 2, 3 or 4 C=C-double bonds, in particular 1 or 2 C=C-double bonds. Preferably, R¹ has 16 to 20 carbon atoms. In particular, R¹ is a straight chain hydrocarbon group having 16 to 20 carbon atoms, especially a saturated straight chain hydrocarbon group having 16 to 20 carbon atoms or an unsaturated straight chain hydrocarbon group having 16 to 20 carbon atoms and 1 or 2 C=C-double bonds. Especially, R¹ is a straight chain hydrocarbon group having 18 carbon atoms, especially a saturated linear hydrocarbon group having 18 carbon atoms or an unsaturated straight chain hydrocarbon group having 18 carbon atoms and 1 C=C-double bond.

Examples of groups R¹ include, but are not limited to lauryl (n-dodecyl), myristyl (n-tetradecyl), cetyl (n-hexadecyl), margaryl (n-heptadecyl), stearyl (n-octadecyl), arachidyl (n-eicosanyl), behenyl (n-docosenyl), palmitoleyl (9-hexadecen-1-yl), oleyl (9-hexadecen-1-yl), 11-octadecen-1-yl, 9,12-octadecadien-1-yl and 9,12,15-octadecatrien-1-yl and mixtures thereof, such as tallowalkyl (mixture of linear alkyl which mainly consists of linear C16/C18 alkyl), and cocoalkyl (mixture of linear alkyl, which mainly consists of C12-C18-alkyl).

In the context of formula (I), C₂-C₄-alkanediyl is understood to include a bivalent saturated hydrocarbon group having 2, 3 or 4 carbon atoms, which may be linear or branched and which is preferably linear. Hence, R² is ethanediyl, propanediyl or butanediyl. R² is in particular 1,2-ethanediyl or 1,3-propanediyl, and especially 1,3-propanediyl.

In the context of formula (I), n is preferably 1.

It is apparent to a skilled person that the oil phase may contain a single amine of the formula (I) or a mixture of different amines of formula (I), which differ in at least one of the following features:
- the type of group R¹
- the type of group R²
- the number n.

In particular, such mixtures may contain a small amount of amines of formula (I), where n is 0. However, it is also possible that such mixtures contain two or more different amines of formula (I), which differ in their group R¹, e.g. in the number of carbon atoms and/or in the degree of unsaturation.

Preferably, at least 70 % by weight, in particular at least 80 % by weight and especially at least 90 % by weight of the amine of formula (I) bear a straight chain hydrocarbon group R¹ having 16 - 20 carbon atoms, said group being a saturated straight chain hydrocarbon group or an unsaturated straight chain hydrocarbon group having 1 or 2 C=C double bonds.

Especially, at least 70 % by weight, in particular at least 80 % by weight and especially at least 90 % by weight of the amine of formula (I) bear a straight chain hydrocarbon group R¹ having 18 carbon atoms, said group being a saturated straight chain hydrocarbon group or an unsaturated straight chain hydrocarbon group having 1 C=C double bond.

In particular, the organic amine of formula (I) comprises at least 90 % by weight, especially at least 95 % by weight, based on the total amount of the organic amine of formula (I) contained in the emulsion, of at least one organic amine of the formula (I), wherein n is 1.

In a very special group of embodiments of the invention the organic amine of formula (I) comprises at least 90 % by weight, especially at least 95 % by weight, based on the total amount of the organic amine of formula (I) contained in the emulsion, of at least one organic amine of the formula (I), wherein n is 1, R² is 1,3-propanediyl and where R¹ is hydrocarbon group having 18 carbon atoms, said group being a saturated hydrocarbon group or an unsaturated hydrocarbon group having 1 C=C double bond.

Examples of particular amines of formula (I), which have a content of at least 90 % by weight of amines of the formula (I) with n being 1 are 2 are N-oleyl-1,3-diaminoethane, N-tallow-1,3-diaminopropane, 1-cocoalkyl-1,3-diaminopropane, stearyl-1,3-diaminopropane, tallowalkyl-1,3-diaminopropane, N-[3-(cocoalkylamino)propyl]propane-1,3-diamine (= cocoalkyldipropylentriamine), N-[3-(tallowalkylamino)propyl]propane-1,3-diamine (= tallowalkyldipropylentriamine), N-[3-[3-(cocoalkylamino)propylamino]propyl]-propane-1,3-diamine (= cocoalkyltripropylentetramine) and N-[3-[3-(tallowalkylamino)-propylamino]propyl]propane-1,3-diamine (= tallowalkyltripropylentetramine). Suitable amines of the formula (I), which contain at least 90 % by weight of amines of the formula (I) with n being 1 are 2 are commercially available, e.g. the Duomeen® brands of AkzoNobel, such as Duomeen® T, Duomeen® O and Duomeen® C, the Triameen® brands of AkzoNobel, such as Triameen® T and Triameen® C, the Tetrameen® brands of AkzoNobel, such as Tetrameen® T, the Dinoram® brands of Archem, such as Dinoram® O, and Inipol® DS.

The emulsions of the invention are prepared by homogenizing a mixture of the constituents of the oil phase, i.e. essentially the amine of the formula (I), and water by using a rotor-stator homogenizer or by using a high pressure homogenizer.

Mixing and homogenizing of the resulting mixture may be performed successively or jointly. In other words, the mixture of the oil phase and water may be prepared in a first step followed by a homogenization step of the mixture in a subsequent second step. It is also possible to perform the mixing of the constituents of the oil phase with water and the homogenization jointly in a single step, i.e. mixing and homogenizing are preformed at the same time.

For example a mixture of the oil phase and water can be prepared by adding the constituents of the oil phase to water with stirring to obtain a pre-emulsion with is then homogenized. In this case, the mixing is usually performed in a stirred tank mixing vessel, having a discharge pipe, which is connected to the homogenizer, where the pre-emulsion is homogenized to obtain the emulsion of the invention. In a special embodiment the emulsion discharged from the homogenizer is fed back to the mixing vessel in order in order to allow for performing several passages of the pre-emulsion through the homogenizer until the emulsion has the desired properties P.1 and P.2. Then the emulsion is discharged from the mixing vessel and packaged. It may also be sufficient to perform a single passage of the pre-emulsion through the homogenizer. In this case the discharged emulsion is directly subjected to packaging.

Typically, the mixing of the oil phase and water is effected at temperatures in the range from 5 to 80°C, especially in the range from 10 to 50°C. Typically, the homogenization is effected at temperatures in the range from 5 to 80°C, especially in the range from 10 to 50°C.

The relative amount of oil phase and water are chosen such that the desired concentration of the oil-phase in the emulsion results. In other words, the relative amounts of oil-phase and water on a weight base is in the range from 1 : 99 to 5 : 95, in particular in the range from 1.5 : 98.5 to 3 : 97.

Preferably, the water, which is used for preparing the emulsion, does not contain considerable amounts of organic components. In particular the water does not contain more than 0.1 % by weight, in particular less than 0.05 % by weight of organic material.

In particular deionized water is used fro preparing the emulsion. Especially, water is used, which has a conductivity of at most 30 µS/cm at 20°C as determined, e.g. by ASTM D1193 - 06(2011) or ASTM D1125 - 14.

According to a first embodiment of the process of the invention, homogenization is performed by means of a rotor-stator homogenizer. Homogenizers of the rotor-stator type are known in the art and in principle comprise all of the types of dynamic mixer where a rotationally symmetrical, rotor interacts with a stator to form one or more operating regions which in essence have the shape of an annular gap. Within said operating regions, the material to be homogenized is subjected to severe shear stresses, and high levels of turbulence often prevail in these annular gaps, and likewise promote the homogenizing process. Examples of homogenizers having a rotor-stator element include, toothed-ring dispersers, annular-gap mills, and colloid mills. Preference is given to toothed-ring dispersers.

The rotor-stator homogenizer is usually operated at a relatively high rotational rate, generally from 2000 to 20 000 rpm to achieve high peripheral velocities and thus a high shear rate, thereby subjecting the mixture of the oil phase and water to severe shear stresses, which lead to effective comminution of the oil phase and thus to very effective emulsification of the oil phase in the aqueous phase of the emulsion. Frequently, the rotor stator element is operated at peripheral velocities in the range of 5 to 40 m/s, in particular in the range of 10 to 30 m/s.

Preference is given to those rotor-stator homogenizers, where the rotor-stator elements have means of generating cavitation forces. Means of this type can be elevations arranged on the rotor side and/or on the stator side, where these protrude into the operating region of the element and which have at least one area where the normal has a tangential fraction, examples being pins, teeth, or knives or coaxial rings with radially arranged slots. The rotor-stator element preferably has, on the side of the rotor, at least one toothed ring arranged so as to be rotationally symmetrical, and/or at least one ring which has radial slots (tooth gaps) arranged so as to be rotationally symmetrical. Apparatuses of this type are also termed toothed-ring dispersers or toothed-ring dispersing machines. In particular, the rotor-stator homogenizer has, on the side of the rotor and also on the side of the stator, at least one toothed ring arranged so as to be rotationally symmetrical, and/or at least one ring with radial slots (tooth gaps), where the (toothed) rings on the side of the rotor and on the side of the stator are arranged coaxially and undergo mutual intermeshing to form an annular gap.

In particular, the rotor-stator mixer is a toothed-ring dispersing machine which has a conical stator with a concentric frustoconical recess, and which has a likewise concentric conical rotor, where the rotor protrudes into the frustoconical operating chamber of the stator in such a way as to form an annular operating chamber, into which teeth protrude on the side of the rotor and of the stator, and these are respectively arranged in the form of one or more, e.g. 2, 3, or 4 coaxial toothed rings on the side of the rotor and of one or more, e.g. 1, 2, 3, or 4 coaxial toothed rings on the side of the stator, in such a way that the toothed rings undergo mutual offset intermeshing.

Apparatuses of this type are known to the person skilled in the art by way of example from DE 10024813 A1 and US 2002/076639, and are supplied by way of example by Cavitron vom Hagen & Funke GmbH Verfahrenstechnik, Sprockhövel, Germany, by Wilhelm Siefer GmbH & Co. KG, Velbert, Germany; or by Ytron Process Technology GmbH & Co. KG, Bad Endorf Germany.

Surrounding rotor and stator there is usually a housing, which has inlets for the aqueous mixture of the oil phase and water, and outlets for the emulsion. It may also possible to provide the oil phase and water via separate inlets and perform mixing and homogenization jointly. For example, a mixture of the oil phase and water, which contains the desired amount of oil phase, is introduced into the rotor-stator homogenizer. However, it is also possible to use a larger amount of water and then to concentrate the resultant emulsion. It is equally possible to begin by producing a more concentrated emulsion and to dilute this with further water.

The desired properties P.1 and P.2 can be controlled by variation of the homogenization conditions, in the case of the rotor-stator homogenizer by variation of the pheripheral speed, the geometry of the rotor-stator arrangement, the concentration of the oil phase in water and by the emulsification temperature. The parameters of the rotor-stator homogenization, which are required for obtaining the desired properties P.1 and P.2 of the emulsion can be determined by routine.

According to a second embodiment of the process of the invention, homogenization is performed by means of a high-pressure homogenizer. In this case, the water and the oil phase can first be mixed and then homogenized with one another. It is also possible to perform the mixing of the water and the oil phase and the homogenization simultaneously, by, for example, feeding the water and oil-phase simultaneously into a high-pressure homogenizer.

Such a high-pressure homogenizer generally comprises at least one homogenizing nozzle through which the mixture to be homogenized is forced under pressure (emulsifying pressure). The high-pressure homogenizer preferably has at least one homogenizing nozzle/homogenizing device selected from the group of flat nozzle, perforated plate, slotted plate, offset nozzle and counterjet disperser, especially from the group of perforated plate, slotted plate and offset nozzle. In a particular embodiment, at least one two-jet nozzle is used in the homogenizing step. A two-jet nozzle especially comprises a plate with two bores mounted at a particular angle α relative to the plate surface. The liquid passes through the nozzle and is divided into two liquid jets which meet one another behind the bore exits. More particularly, a two-jet nozzle having a diameter (hole diameter) d in the range from 50 to 700 µm, preferably from 50 to 100 µm, and an angle α in the range from 10° to 60°, preferably from 20° to 30°, is used. If the homogenization is effected by means of a high-pressure homogenizer, the emulsifying pressure is generally 10 to 4000 bar, in particular 40 to 2000 bar, especially in the range from 60 to 1000 bar. The emulsifying pressure refers to the pressure drop over the homogenizing nozzle.

The desired properties P.1 and P.2 can be controlled by variation of the homogenization conditions, in the case of the high-pressure homogenizer by variation of the emulsification pressure, the geometry of the nozzle or nozzles, the concentration of the oil phase in water and by the emulsification temperature. The parameters of the high pressure homogenization, which are required for obtaining the desired properties P.1 and P.2 of the emulsions can be determined by routine.

For the reasons given above, the aqueous oil-in-water emulsions of the present invention are particularly useful for reducing or inhibiting corrosion in water-bearing systems, in particular in water circuits and steam circuits of steam generators.

For this, a corrosion inhibiting amount of an aqueous oil-in-water emulsion of the invention is added to the water-bearing system, i.e. to the water contained in the circuits of the water bearing systems. For achieving corrosion inhibition, the emulsion of the invention is usually dosed in such an amount that the concentration of the amine of the formula (I) in the water contained in the water bearing systems is in the range from 0.05 to 10 ppm, on a weight basis. If the emulsion of the invention is used in a steam generator a corrosion inhibiting amount is achieved, if the concentration of the amine of the formula (I) in the steam condensate is in the range from 0.05 to 10 ppm, on a weight basis. Frequently, the concentration of the amine of the formula (I) can be monitored and the dosing rate is adapted to maintain the desired concentration of the amine of the formula (I) in the above range. It is apparent to a skilled person that both feeding and monitoring of the concentration can be done automatically.

For achieving corrosion inhibition in water bearing systems, the emulsion can be used in a manner as described in the references cited in the introductory part. For review see in particular Betova et al. Film-Forming Amines in Steam/Water Cycles, VTT Research Report: VTT-R-03234-14 (2014) and the references cited therein, see also Hater et al. Film Forming Technology in Hydrocarbon Engineering, 2015 (9).

For example, if the emulsion of the invention is used in a steam generator the emulsion can be fed directly into the boiler, to the condensate and/or to the water fed into the boiler, the latter being particularly preferred.

The invention is now described in detail by the following examples.

### A: Analytics:

### 1) Microscope Measurements for determining the particle size:

The measurements were performed by using a conventional light microscope under top light at a magnification of 100.

Specimens of the emulsion were put with a sling at 20 °C onto a microscope glass slide. The sling included a volume of 10 µl. The droplet was covered with a microscope cover glass of a size of 18 * 18 mm. This means that the total specimen area was 324 mm², From this area as section of 0.19 mm² was analysed The mean diameters of the visible droplets in the emulsion were estimated visually, and the number of particles of a selected size range (1 - 11 µm) was counted.

### 2) Instabilty index in Photo-Cenrifuge Experiments:

The following equipment was used:
Commerical hoto-centrifugation equipment LUMiSizer^{R} (Supplier: LUM Gesellschaft für Labor-, Umweltdiagnostik & Medizintechnik m. b. H., Justus-von-Liebig-Straße 3, 12489 Berlin, Germany).
The instability index was calculated with the SEPView^{R} programm.

1.6 ml of each sample was transferred with a transfer pipette (1-5 ml volume) into a poly carbonate cuvette with 10*8mm base area. The optical path length was 10 mm. The LUMiSizer^{R} was set to the desired temperature. Results at 25 °C are reported below. (The results for specimens at 5 °C and at 40 °C showed the same trend.) Then each cuvette was adjusted in the centrifuge. All samples were measured at 4000 rpm corresponding to a gravitational acceleration of 2.23 g with regard to their transmission for light at 470 nm wavelength. The light factor was 1. In the first 50 sec, 10 measurements were done. In the next 50 minutes, 300 measurements (all 10 sec) were done.

From the thus obtained data, the instability index was calculated by using the program SEPView^{R}. The measuring range was adapted (for example: samples at 25°C: 119,9 - 129,5 mm along the cuvette; measured from the position of the meniscus of the liquid in the cuvette). The instability index was calculated for a centrifugation time of 390 seconds.

### 3) Viscosity

Viscosity was determined in accordance to the Brookfield method (DIN EN ISO 2555:2000-01) at 20°C by means of a Brookfiled Viscosimeter Model RV, Seriennummer 99422 using spindle type 2 at 100 rpm.

### B: Preparation Procedures

In the following experiments Duomeen^{R} O (Akzo Nobel) which is 100 % N-oleyl-1,3-propylene diamine was used (Formula (I) with n = 1, R¹ = 1-oleyl and R² = 1,3-propanediyl).

De-ionized water having a conductivity <20 µS/cm was used.

In the preparation of the emulsions of the invention Ultraturrax® T 25 with dispersing bar S25 18G (Stator diameter 18mm; shear gap 0,25 mm; Rotor diameter 12,7mm) was used as a rotor-stator homogenizer.

### 1) General procedure for the preparation of the emulsion according to the invention:

De-ionized water is filled into a 900 ml glass beaker. The dispersing bar of the rotor-stator homogenizer is immersed into the water and switched on. The homogenizer was operated at 24000 rpm, which corresponds to a peripheral speed of the rotor of 15.9 m/sec. Then a defined amount of the amine of the general formula (I) is added at once with a pipette. After 30 seconds the homogenizer is switched off. The obtained emulsion is transferred into a 100 ml borosilicate bottle. Foam is not transferred completely.

Emulsions prepared by this procedure were long term stable, which means that they were still stable and did not show noticeably phase separation or formation of smear after a storage time of four weeks at 20 C. The emulsions also showed long term stability at 5 °C and at 40 °C. The viscosity of the thus obtained emulsions at 20°C was less than 150 mPas.

### 2) General procedure for the preparation of the emulsion according to prior art:

The desired amount of alkyl or alkylene diamine or triamine with the general formula (I) is mixed with de-ionized water in a glass beaker of 100 ml with a magnetic stirring bar (6 x 20 mm) on a magnetic stirrer at room temperature. The mixing time can vary between 1 minute to 1 hour and the stirring speed was 1200 rpm.

Emulsions prepared by this procedure were not stable and segregated within 48 h.

### C: Results:

### Example 1 and Comparative Example 1: Concentration of N-oleyl-1,3-propylene diamine = 1 % by weight.

The emulsion obtained according to the inventive procedure showed 177 particles with a mean diameter between 1 and 11 µm. The emulsion obtained according to the comparative procedure showed only 2 such particles.

The emulsion obtained according to the inventive procedure had an instability index of 0.021, while the emulsion obtained according to the comparative procedure had an instability index of 0.036.

### Example 2 and Comparative Example 2: Concentration of N-oleyl-1,3-propylene diamine = 2 % by weight.

The emulsion obtained according to the inventive procedure showed 192 particles with a mean diameter between 1 and 11 µm, while the emulsion obtained according to the comparative procedure showed only 10 such particles.

The emulsion obtained according to the inventive procedure had an instability index of 0.017, while the emulsion obtained according to the comparative procedure had an instability index of 0.066.

### Example 3 and Comparative Example 3: Concentration of N-oleyl-1,3-propylene diamine = 3 % by weight.

The emulsion obtained according to the inventive procedure showed 162 particles with a mean diameter between 1 and 11 µm, while the emulsion obtained according to the comparative procedure showed only 18 such particles.

The emulsion obtained according to the inventive procedure had an instability index of 0.018, while the emulsion obtained according to the comparative procedure had an instability index of 0.365.

### Example 4 and Comparative Example 4: Concentration of N-oleyl-1,3-propylene diamine = 4 % by weight.

The emulsion obtained according to the inventive procedure showed 78 particles with a mean diameter between 1 and 11 µm, while the emulsion obtained according to the comparative procedure showed only 3 such particles.

The emulsion obtained according to the inventive procedure had an instability index of 0.002, while the emulsion obtained according to the comparative procedure had an instability index of 0.171.

### Example 5 and Comparative Example5: Concentration of N-oleyl-1,3-propylene diamine = 5 % by weight.

The emulsion obtained according to the inventive procedure had an instability index of below 0.001, while the emulsion obtained according to the comparative procedure had an instability index of 0.268.

## Claims

1. An aqueous oil-in-water emulsion containing
a) 1 to 5 % by weight, based on the total weight of the emulsion, of an oil phase comprising at least one organic amine of the formula (I)
R¹-(NH-R²)ₙ-NH₂ (I)
wherein
n is 0, 1 or 2
R¹ is a linear or branched, acyclic hydrocarbon group having 12 to 22 carbon atoms;
R² is C2-C4-alkanediyl;
b) and water,
where the aqueous oil-in-water emulsion does not contain more than 2 % by weight of organic ingredients, which are different from the amines of formula (I), based on total amount of organic components contained in the aqueous oil-in-water emulsion, and where the organic amine of formula (I) comprises at least 90 % by weight, based on the total amount of the organic amine of formula (I) contained in the aqueous oil-in-water emulsion, of an organic amine of formula (I) with n being 1 or 2,
where the aqueous emulsion has at least one of the following properties:
P.1: the number average particle diameter of the droplets of the oil phase, as determined by light microscopy of at least 50 droplets is in the range of 1 to 11 µm,
P.2: the instability index as defined by the ratio of observed clarification to maximum clarification, as determined by centrifugation for 390 seconds at a gravitational acceleration of 2.23 g and a temperature of 25°C is at most 0.025.

2. The emulsion of claim 1, wherein R¹ in formula (I) has 16 to 20 carbon atoms.

3. The emulsion of any one of the preceding claims, wherein R¹ in formula (I) is a saturated straight chain hydrocarbon group or an unsaturated straight chain hydrocarbon group having 1, 2 or 3 C=C double bonds.

4. The emulsion of any one of the preceding claims, wherein at least 70 % by weight of the amine of formula (I) bear a hydrocarbon group R¹ having 18 carbon atoms, said hydrocarbon group being a saturated straight chain hydrocarbon group or an unsaturated straight chain hydrocarbon group having 1 C=C double bond.

5. The emulsion of any one of the preceding claims, wherein the organic amine of formula (I) comprises at least 90 % of the organic amine of formula (I), wherein n is 1.

6. The emulsion of any one of the preceding claims, wherein R² in formula (I) is propane-1,3-diyl.

7. The emulsion of any one of the preceding claims, wherein the amine of formula (I), wherein n is 1 or 2, contributes with at least 90 % by weight to the total amount of organic carbon contained in the emulsion.

8. The emulsion of any one of the preceding claims having a pH as determined at 20°C in the range from 10.0 to 12.0.

9. A process for producing the aqueous oil-in-water emulsion of any one of the preceding claims, which comprises the following steps:
i) providing a mixture of an organic amine of the formula (I) and water, where the organic amine of formula (I) comprises at least 90 % by weight, based on the total amount of the organic amine of formula (I), of an organic amine of formula (I) with n being 1 or 2, wherein the weight ratio of the organic amine of the formula (I) and water is in the range from 1 : 99 to 5 : 95;
ii) homogenizing the mixture by using a rotor-stator homogenizer or by using a high pressure homogenizer,
where steps i) and ii) can be performed successively or jointly.

10. The process of claim 9, where the water used for providing the mixture of the oil phase and water has a conductivity of at most 30 µS/cm.

11. The process of claim 10, where the homogenizer is a rotor-stator homogenizer, which is operated with a peripheral speed of 5 to 40 m/s.

12. An aqueous oil-in-water emulsion of any one of claims 1 to 8, which is obtainable by a process of any one of claims 9 to 11.

13. The use of the aqueous oil-in-water emulsion of any one of claims 1 to 8 or 12 as a corrosion inhibitor in water-bearing systems.

14. A method for inhibiting corrosion in a water-bearing system, which comprises adding a corrosion inhibiting amount of an aqueous oil-in-water emulsion as defined in any one of claims 1 to 8 or 12 to the water-bearing system.

15. The use of claim 13 or the method of claim 14, where the water-bearing system is selected from water circuits and steam circuits of steam generators.

## Patentansprüche

1. Wässrige ÖI-in-Wasser-Emulsion, enthaltend
a) 1 bis 5 Gew.-%, bezogen auf das Gesamtgewicht der Emulsion, einer Ölphase, umfassend wenigstens ein organisches Amin der Formel (I),
R¹-(NH-R²)ₙ-NH₂ (I)
worin
n für 0, 1 oder 2 steht;
R¹ für einen linearen oder verzweigten, acylischen Kohlenwasserstoffrest mit 12 bis 22 Kohlenstoffatomen steht;
R² für C₂-C₄-Alkandiyl steht;
b) und Wasser,
wobei die wässrige Öl-in-Wasser-Emulsion nicht mehr als 2 Gew.-% organische Bestandteile enthält, die von den Aminen der Formel (I) verschieden sind, bezogen auf die Gesamtmenge der in der wässrigen Öl-in-Wasser-Emulsion enthaltenen organischen Komponenten, und wobei das organische Amin der Formel (I) wenigstens 90 Gew.-%, bezogen auf die Gesamtmenge des in der wässrigen Öl-in-Wasser-Emulsion enthaltenen organischen Amins der Formel (I), eines organischen Amins der Formel (I) mit n gleich 1 oder 2 umfasst,
wobei die wässrige Emulsion wenigstens eine der folgenden Eigenschaften aufweist:
P.1: der zahlenmittlere Teilchendurchmesser der Tröpfchen der Ölphase, bestimmt durch Lichtmikroskopie an wenigstens 50 Tröpfchen, liegt im Bereich von 1 bis 11 µm,
P.2: der Instabilitätsindex, definiert durch das Verhältnis von beobachteter Klärung zur maximaler Klärung, bestimmt durch Zentrifugation für 390 Sekunden bei einer Gravitationsbeschleunigung von 2,23 g und einer Temperatur von 25 °C, beträgt höchstens 0,025.

2. Emulsion nach Anspruch 1, worin R¹ in Formel (I) 16 bis 20 Kohlenstoffatome aufweist.

3. Emulsion nach einem der vorhergehenden Ansprüche, wobei R¹ in Formel (I) ein gesättigter geradkettiger Kohlenwaserstoffrest oder ein ungesättigter geradkettiger Kohlenwasserstoffrest mit 1, 2 oder 3 C=C Doppelbindungen ist.

4. Emulsion nach einem der vorhergehenden Ansprüche, wobei wenigstens 70 Gew.-% des Amins der Formel (I) einen Kohlenwasserstoffrest R¹ mit 18 Kohlenstoffatomen tragen, wobei dieser Kohlenwasserstoffrest ein gesättigter geradkettiger Kohlenwasserstoffrest oder ein ungesättigter geradkettiger Kohlenwasserstoffrest mit 1 C=C Doppelbindung ist.

5. Emulsion nach einem der vorhergehenden Ansprüche, wobei das organische Amin der Formel (I) wenigstens 90 % des organischen Amins der Formel (I) mit n gleich 1 umfasst.

6. Emulsion nach einem der vorhergehenden Ansprüche, worin R² in Formel (I) für Propan-1,3-diyl steht.

7. Emulsion nach einem der vorhergehenden Ansprüche, wobei das Amin der Formel (I), worin n für 1 oder 2 steht, mit wenigstens 90 Gew.-% zu der Gesamtmenge des in der Emulsion enthaltenen organischen Kohlenstoffs beiträgt.

8. Emulsion nach einem der vorhergehenden Ansprüche mit einem bei 20 °C bestimmten pH-Wert im Bereich von 10,0 bis 12,0.

9. Verfahren zur Herstellung der wässrigen Öl-in-Wasser-Emulsion nach einem der vorhergehenden Ansprüche, umfassend die folgenden Schritte:
i) Bereitstellen einer Mischung aus einem organischen Amin der Formel (I) und Wasser, wobei das organische Amin der Formel (I) wenigstens 90 Gew.-%, bezogen auf die Gesamtmenge des organischen Amins der Formel (I), eines organischen Amins der Formel (I) umfasst, worin n für 1 oder 2 steht, worin das Gewichtsverhältnis des organischen Amins der Formel (I) und Wasser im Bereich von 1 : 99 bis 5 : 95 liegt;
ii) Homogenisieren des Gemischs unter Verwendung eines Rotor-Stator-Homogenisators oder unter Verwendung eines Hochdruckhomogenistors,
wobei die Schritte i) und ii) nacheinander oder gemeinsam durchgeführt werden können.

10. Verfahren nach Anspruch 9, wobei das zum Bereitstellen der Mischung aus Ölphase und Wasser verwendete Wasser eine Leitfähigkeit von höchstens 30 µS/cm hat.

11. Verfahren nach Anspruch 10, wobei der Homogenisator ein Rotor-Stator-Homogenisators ist, der mit einer Umfangsgeschwindigkeit von 5 bis 40 m/s betrieben wird.

12. Wässrige Öl-in-Wasser-Emulsion nach einem der Ansprüche 1 bis 8, erhältlich nach einem Verfahren nach einem der Ansprüche 9 bis 11.

13. Verwendung einer wässrigen Öl-in-Wasser-Emulsion nach einem der Ansprüche 1 bis 8 oder 12 als Korrosionshemmer in wasserführenden Systemen.

14. Verfahren zur Hemmung von Korrosion in einem wasserführenden System, umfassend die Zugabe einer korrosionshemmenden Menge einer wässrigen Öl-in-Wasser-Emulsion wie in einem der Ansprüche 1 bis 8 oder 12 definiert zu dem wasserführenden System.

15. Verwendung nach Anspruch 13 oder Verfahren nach Anspruch 14, wobei das wasserführende System aus Wasserkreisläufen und Dampfkreisläufen von Dampferzeugern ausgewählt ist.

## Revendications

1. Émulsion aqueuse d'huile dans l'eau contenant
a) 1 à 5 % en poids, par rapport au poids total de l'émulsion, d'une phase huileuse comprenant au moins une amine organique représentée par la formule (I)
R¹-(NH-R²)ₙ-NH₂ (I)
dans laquelle
n vaut 0, 1 ou 2
R¹ est un groupe hydrocarboné acyclique linéaire ou ramifié ayant 12 à 22 atomes de carbone ;
R² est un groupe alcanediyle en C₂-C₄ ;
b) et de l'eau,
l'émulsion aqueuse d'huile dans l'eau ne contenant pas plus de 2 % en poids d'ingrédients organiques, qui sont différents des amines de formule (I), par rapport à la quantité totale de composants organiques contenus dans l'émulsion aqueuse d'huile dans l'eau, et l'amine organique de formule (I) comprenant au moins 90 % en poids, par rapport à la quantité totale de l'amine organique de formule (I) contenue dans l'émulsion aqueuse d'huile dans l'eau, d'une amine organique de formule (I) avec n valant 1 ou 2,
l'émulsion aqueuse ayant au moins l'une des propriétés suivantes :
P.1 : le diamètre moyen en nombre de particule des gouttelettes de la phase huileuse, tel que déterminé par microscopie optique d'au moins 50 gouttelettes, est dans la plage de 1 à 11 µm,
P.2 : l'indice d'instabilité tel que défini par le rapport de la clarification observée à la clarification maximale, telle que déterminée par centrifugation pendant 390 secondes à une accélération de gravité de 2,23 g et une température de 25 °C, est d'au maximum 0,025.

2. Émulsion selon la revendication 1, dans laquelle R¹ dans la formule (I) a 16 à 20 atomes de carbone.

3. Émulsion selon l'une quelconque des revendications précédentes, dans laquelle R¹ dans la formule (I) est un groupe hydrocarboné saturé à chaîne droite ou un groupe hydrocarboné insaturé à chaîne droite ayant 1, 2 ou 3 doubles liaisons C=C.

4. Émulsion selon l'une quelconque des revendications précédentes, dans laquelle au moins 70 % en poids de l'amine de formule (I) porte un groupe hydrocarboné R¹ ayant 18 atomes de carbone, ledit groupe hydrocarboné étant un groupe hydrocarboné saturé à chaîne droite ou un groupe hydrocarboné insaturé à chaîne droite ayant 1 double liaison C=C.

5. Émulsion selon l'une quelconque des revendications précédentes, dans laquelle l'amine organique de formule (I) comprend au moins 90 % de l'amine organique de formule (I) dans laquelle n vaut 1.

6. Émulsion selon l'une quelconque des revendications précédentes, dans laquelle R² dans la formule (I) est le groupe propane-1,3-diyle.

7. Émulsion selon l'une quelconque des revendications précédentes, dans laquelle l'amine de formule (I), dans laquelle n vaut 1 ou 2, contribue à au moins 90 % en poids de la quantité totale de carbone organique contenu dans l'émulsion.

8. Émulsion selon l'une quelconque des revendications précédentes ayant un pH tel que déterminé à 20 °C dans la plage de 10,0 à 12,0.

9. Procédé pour la production de l'émulsion aqueuse d'huile dans l'eau selon l'une quelconque des revendications précédentes, qui comprend les étapes suivantes :
i) la fourniture d'un mélange d'une amine organique représentée par la formule (I) et d'eau, l'amine organique de formule (I) comprenant au moins 90 % en poids, par rapport à la quantité totale de l'amine organique de formule (I), d'une amine organique de formule (I) avec n valant 1 ou 2, le rapport pondéral de l'amine organique représentée par la formule (I) et de l'eau étant dans la plage de 1:99 à 5:95 ;
ii) l'homogénéisation du mélange à l'aide d'un homogénéisateur à rotor-stator ou à l'aide d'un homogénéisateur à haute pression,
les étapes i) et ii) pouvant être effectuées successivement ou concurremment.

10. Procédé selon la revendication 9, l'eau utilisée pour la fourniture du mélange de la phase huileuse et d'eau ayant une conductivité d'au maximum 30 µS/cm.

11. Procédé selon la revendication 10, l'homogénéisateur étant un homogénéisateur à rotor-stator, qui est amené à fonctionner avec une vitesse périphérique de 5 à 40 m/s.

12. Émulsion aqueuse d'huile dans l'eau selon l'une quelconque des revendications 1 à 8, qui peut être obtenue par un procédé selon l'une quelconque des revendications 9 à 11.

13. Utilisation de l'émulsion aqueuse d'huile dans l'eau selon l'une quelconque des revendications 1 à 8 ou 12 en tant qu'inhibiteur de corrosion dans des systèmes renfermant de l'eau.

14. Procédé pour l'inhibition de la corrosion dans un système renfermant de l'eau, qui comprend l'ajout au système renfermant de l'eau d'une quantité inhibitrice de corrosion d'une émulsion aqueuse d'huile dans l'eau telle que définie dans l'une quelconque des revendications 1 à 8 ou 12.

15. Utilisation selon la revendication 13 ou procédé selon la revendication 14, le système renfermant de l'eau étant choisi parmi les circuits d'eau et les circuits de vapeur de générateurs de vapeur.
